# EUROPEAN PATENT APPLICATION

(11) **EP 4 303 474 A1**
(43) Date of publication of application: **10.01.2024**
(21) Application number: 23182660.3
(22) Date of filing: 30.06.2023
(51) Int. Cl.: F16K 3/08, F16K 31/53, F16K 37/00

(54) **VALVE UNIT FOR CONTROLLING FLOW OF HEAT TRANSFER LIQUID AND HEATING SYSTEM**

(30) Priority: 30.06.2022 FI 20225602
(71) Applicant: Simap Oy, 00330 Helsinki (FI)
(72) Inventor: LAINE, Seppo, 00330 HELSINKI (FI); HEINONEN, Heikki, 08680 LOHJA (FI)
(74) Representative: Berggren Oy

(57) **Abstract**

The valve unit (1) for controlling the flow of a heat transfer liquid through a heating element (33) of a central heating system comprises a valve (2) and an electrical actuator (15) for operating the valve (2), the valve comprising a flow channel (4) having an inlet (4a) and an outlet (4b), a stationary flow control surface (5) arranged between the inlet (4a) and the outlet (4b) and comprising at least one control surface opening (6) for the flow of the heat transfer liquid, and a rotatable valve element (7) for controlling the flow in the flow channel (4), the valve element (7) comprising at least one valve element opening (8), the valve element (7) being rotatable against the flow control surface (5) about an axis that is perpendicular to the flow control surface (5), wherein by rotation of the valve element (7) the position of the valve element opening (8) relative to the control surface opening (6) can be changed to adjust the size of the overlapping areas of the valve element opening (8) and the control surface opening (6).

## Description

### Technical field of the invention

The present invention concerns a valve unit for controlling the flow of a heat transfer liquid through a heating element of a central heating system, as defined in claim 1. The invention also concerns a heating system.

### Background of the invention

In central heating systems, where heated water is circulated through radiators, the flow through the radiators is typically controlled by disc valves operated by mechanical thermostatic actuators utilizing a wax or liquid capsule. The valves designed for this purpose have high energy consumption and poor controllability and repeatability and therefore they cannot be optimally used in applications with electronic actuators.

A disc valve comprises a disc, also known as plug, functioning as a flow control element. The disc is moveable in a direction that is perpendicular to the surface of the disc. When the disc is moved against a valve seat, the valve is closed. Typically, the disc is provided with a sealing element made of rubber or similar elastic material. When the disc is lifted from the valve seat, the valve is opened. The more the disc is lifted, the larger is the flow area through the valve.

In a typical disc valve, the disc is circular. When the disc is lifted from the valve seat, water is allowed to flow between the valve seat and the disc through the whole circumference of the gap between the valve seat and the disc. Even a small lift of the disc thus leads to a relatively large flow area. In an exemplary disc valve, the diameter of the valve seat and the disc could be 10 mm. If the disc is lifted 0.1 mm, the flow area is approximately 3 mm². In a fully open valve, the lift could be 0.5 mm, leading to a flow area of approximately 15 mm².

When the valve is opened towards the fully open position, the flow rate becomes gradually limited by other parts of the valve. Thus, the useful control range in practical applications is very short and close to the fully closed position of the valve. The short moving range alone makes precise controlling of the valve very difficult. An additional problem with disc valves is that when the valve is not completely closed, the water constantly flows between the sealing surfaces of the disc and the valve seat. The water always contains some impurities, and the flow past the sealing surfaces results in dirt adhering to the sealing surfaces. The dirt can lead to sticking of the valve. Even if sticking of the valve is avoided, the dirt accumulating on the sealing surfaces affects the flow area. In a new and clean valve a certain valve lift corresponds to a certain flow area. In a valve with impurity deposits on the disc and/or the sealing, the flow area with the same valve lift is smaller due to the clogging of the gap between the valve seat and the disc. Therefore, even if the position of the disc is known, the flow area corresponding to the position is not necessarily known.

Furthermore, the properties of the elastic sealing element change over time. When the valve is closed, the elastic sealing element is compressed. As the valve is opened, the sealing element returns to its non-compressed dimensions. However, the sealing element may lose its elastic properties over time. In a worn valve, the flow area with a certain valve lift could thus be larger than in a new valve. The sealing element may also stick to the valve seat and tear when separated from the seat, thus becoming unable to fully close the valve.

The disc valve is loaded by a spring so that in can be operated with the unidirectional force offered by mechanical actuators. In an exemplary valve, the spring force could be 50 N. To operate the valve by an electronic actuator, a short, precise, and strong linear movement is needed. This can be achieved by, e.g., a combination of a direct current motor, reduction gears, and a worm screw transforming the rotary movement into linear movement. This combination is relatively complex to manufacture and its inherent losses are significant. Thus, a lot of electrical energy is needed when using the disc valve as a control element with an electrical actuator. This is especially detrimental when the actuator is powered by batteries.

Due to the above-mentioned drawbacks, precise control of radiators of a central heating system with an electronic actuator is difficult to implement with known disc valves.

### Summary of the invention

An object of the present invention is to provide an improved valve unit for controlling the flow of a heat transfer liquid through a heating element of a central heating system. The characterizing features of the valve unit according to the invention are listed in claim 1. Another object of the invention is to provide an improved heating system.

The valve unit according to the invention comprises a valve and an electrical actuator for operating the valve. The valve comprises a flow channel having an inlet and an outlet, a stationary flow control surface that is arranged between the inlet and the outlet and comprises at least one control surface opening for the flow of the heat transfer liquid, and a rotatable valve element for controlling the flow in the flow channel, the valve element comprising at least one valve element opening extending through the valve element, the valve element being rotatable against the flow control surface about an axis that is perpendicular to the flow control surface and to the surface provided with the valve element opening. The valve is configured such that by rotation of the valve element the position of the at least one valve element opening relative to the at least one control surface opening can be changed to adjust the size of the overlapping areas of the at least one valve element opening and the at least one control surface opening.

In the valve unit according to the invention, the flow through the valve is thus adjusted by rotation of the valve element. During normal operation of the valve, the valve element and the mating surface remain in contact with each other. The features provide significant benefits compared to disc valves typically used in heating systems. Because of the rotating motion of the valve element, the electrical actuator does not need to work against spring force, which significantly reduces the force required for the movement of the moveable flow control element and reduces the energy consumption of the valve unit. The valve unit does thus not need to be mains powered. The rotating motion also allows making the movement of the valve element between a closed position and a fully open position relatively long, which improves the accuracy of the flow control. Because the valve element and the stationary flow control surface remain in contact with each other, impurities of the heat transfer liquid do not accumulate between the parts, which prolongs the service life of the valve unit and ensures that the properties of the valve unit do not significantly change over time. Also the fact that resilient seals are not needed between the valve element and the stationary flow control surface help ensuring that the properties of the valve unit are maintained at a good level over the whole service life of the valve unit.

According to an embodiment of the invention, the valve element is a valve plate. At least the surface facing the stationary flow control surface can be a planar surface, in which case also the stationary flow control surface is a planar surface.

According to an embodiment of the invention, the valve unit is self-contained. The valve unit is thus not connected to mains current, but it can be operated using a dedicated power source. The valve unit can be battery-powered. Alternatively, or in addition, electrical power needed for operating the valve could be produced within the valve unit, for instance by utilizing the kinetic energy or thermal energy of the heat transfer liquid. The battery or other power source or means for producing electrical power do not need to be arranged in the same housing with the electrical actuator, but the valve unit could comprise a separate housing for accommodating batteries or, for instance, a solar panel or other means for producing electricity for the valve unit.

According to an embodiment of the invention, the valve comprises at least one spring for pushing the valve element against the flow control surface. The spring ensures that the valve element and the mating surface remain in close contact with each other.

According to an embodiment of the invention, the valve element is connected to a shaft, the spring is arranged around the shaft, one end of the spring is supported against the valve element and the opposite end of the spring is fixed to the shaft in such a manner that the spring rotates together with the shaft and the valve element. The spring is not in contact with the surface of the flow channel or other stationary part of the valve. When the spring does not rotate relative to the valve element or other surface against which it is supported, the friction forces and consequently the energy consumption of the valve unit are low.

According to an embodiment of the invention, the valve element is arranged on the upstream side of the flow control surface. The pressure of the heat transfer liquid thus presses the valve element against the stationary flow control surface thereby ensuring good sealing.

According to an embodiment of the invention, the at least one valve element opening and the at least one control surface opening are configured such that a change in the rotation angle of the valve element changes the size of the overlapping areas of the at least one valve element opening and the at least one control surface opening linearly. Linearly changing flow area through the valve makes the control of the valve simpler. However, the flow area could also change non-linearly.

According to an embodiment of the invention, the valve element opening is arc-shaped. An arc-shaped opening is a simple way of enabling a linearly changing flow area. However, also a different shape could be used.

According to an embodiment of the invention, the flow control surface and/or the mating surface of the valve element are metal or ceramic surfaces and/or provided with a coating configured to reduce friction and/or adherence of dirt and/or to improve wear resistance of said surfaces. This makes the valve durable and provides low friction between the moving parts.

According to an embodiment of the invention, the flow control surface and the mating surface of the valve element are coated with diamond-like carbon. Alternatively, the surfaces could be provided with some other hard coating.

According to an embodiment of the invention, the valve unit comprises pressure measurement means for measuring the pressure of the heat transfer liquid both on the inlet side and on the outlet side of the valve element. The pressure measurement means allow acquiring pressure measurement data that can be used, for instance, for determining the flow through the valve or for fault diagnosis.

According to an embodiment of the invention, the valve unit comprises temperature measurement means for measuring the temperature of the heat transfer liquid. The temperature measurement means allow acquiring temperature measurement data, which can be used, for instance, for controlling the operation of the valve itself or the whole heating system.

According to an embodiment of the invention, the valve unit comprises means for determining the rotation angle of the valve element. This allows determining the opening degree of the valve.

According to an embodiment of the invention, the valve unit comprises communication means for communicating with a remotely located controller or other data receiving and/or transmitting unit. The communication means can allow receiving of control signals and transmitting of data from the valve unit. The valve can thus be remotely controlled. This allows, for instance, centralized control of several valve units, which improves control of a heating system. Also, data acquired from the valve, for example temperature and/or pressure data, can be utilized in the control of the heating system and for fault diagnosis.

According to an embodiment of the invention, the communication means are wireless. This is beneficial in particular when the valve unit is used as a retrofit in an existing heating system.

According to an embodiment of the invention, the valve unit is configured to transmit to the remotely located controller information on the opening degree of the valve and/or the rotation angle of the valve element. The information can be used, for instance, for achieving a better overall control of the heating system or for fault diagnosis.

The heating system according to the invention comprises a heat transfer piping for conveying heat transfer liquid in the heating system, means for circulating the heat transfer liquid in the heat transfer piping, a heat source for heating the heat transfer liquid circulated in the heat transfer piping, and a plurality of heating elements, through which the heat transfer liquid is arranged to flow, wherein at least some of the heating elements of the heating system comprise a valve unit defined above for controlling the flow of heat transfer liquid through the heating element.

The heating system according to the invention allows a precise control of the heating system.

### Brief description of the drawings

Embodiments of the invention are described below in more detail with reference to the accompanying drawings, in which
Fig. 1 shows a simplified cross-sectional view of a valve unit according to an embodiment of the invention,
Figs. 2A and 2B show a valve element of a valve according to an embodiment of the invention in two different rotational positions,
Fig. 3 shows a valve unit according to another embodiment of the invention, and
Fig. 4 shows a heating system according to an embodiment of the invention.

### Detailed description of the invention

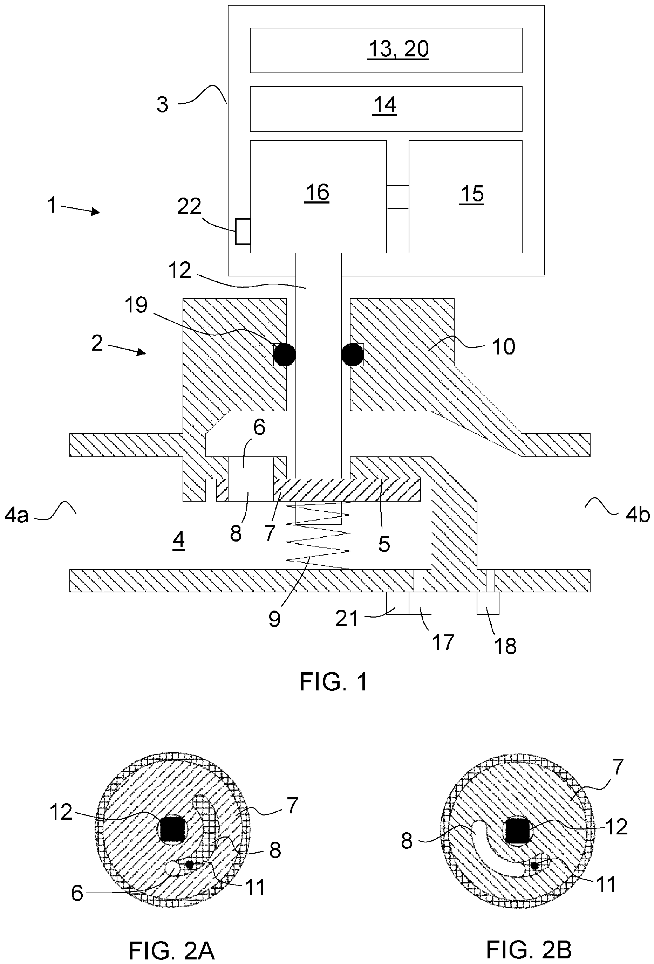

Figure 1 shows a simplified cross-sectional view of a valve unit 1 according to an embodiment of the invention. The valve unit 1 can be used for controlling the flow of a heat transfer liquid through a heating element of a central heating system. The heating system can be, in particular, a heating system of a building. For instance, the heating system can be a heating system of a residential building, a commercial building, a public building or an industrial building. A residential building could be a single-family house, two family house, row house or apartment house. A commercial building could be, for instance, an office building or shopping center. The heating system could also be configured to heat several buildings. The heating system could also be used in a ship, offshore construction or any other space that needs central heating.

The heating element can be, for instance, a radiator. The heating element can also mean a heat transfer pipe portion that is configured to heat a specific area of a building or other space. For instance, the heating element could be a heat transfer pipe portion arranged in a floor of a building.

The heat transfer liquid can be water. The water can comprise additives, for instance for preventing corrosion in the heating system. The heat transfer liquid could also be some other liquid.

The valve unit 1 comprises a valve 2 and an electrical actuator 15 for operating the valve 2. The term "operating" refers here to changing of the opening degree of the valve 2.

The valve 2 comprises a valve body 10. The valve body 10 can be made of one or more parts. Figure 1 also shows an actuator housing 3, inside which the electrical actuator 15 is arranged. However, the electrical actuator 15 could also be arranged inside the valve body 10, or the valve unit 1 could comprise an outer housing accommodating both the valve 2 and the actuator housing 3.

The valve 2 comprises a flow channel 4 having an inlet 4a and an outlet 4b. The valve 2 is configured to be connected to the heating system so that the flow direction of the heat transfer liquid is from the inlet 4a towards the outlet 4b of the valve 2. The flow channel 4 comprises an inlet portion and an outlet portion. In the embodiment of figure 1, the inlet portion and the outlet portion are coaxial. However, the inlet portion and the outlet portion could also be arranged in some other mutual angle.

The valve 2 comprises a stationary flow control surface 5 that is arranged between the inlet 4a and the outlet 4b and comprises at least one control surface opening 6 for the flow of the heat transfer liquid. The stationary flow control surface 5 can be an integral part of the valve body 10. However, the stationary flow control surface 5 could also be arranged in a separate part. Flow of the heat transfer liquid past the stationary flow control surface 5 is allowed only through the one or more control surface openings 6. The area of the control surface openings 6 thus determines an upper limit for the flow area through the valve 2.

The valve 2 further comprises a rotatable valve element 7 for controlling the flow in the flow channel 4. The valve element 7 comprises at least one valve element opening 8 extending through the valve element 7. The valve element 7 is rotatable against the flow control surface 5 about an axis that is perpendicular to the flow control surface 5 and to the surface provided with the valve element opening 8.

In the embodiments of the figures, the valve element is a flat valve plate 7. The valve plate 7 has a planar surface facing the stationary flow control surface 5. Also the stationary flow control surface 5 is a planar surface. However, the stationary flow control surface 5 could also be curved, and at least that surface of the valve element 7, which faces the stationary flow control surface 5, could thus be a curved surface. For instance, the valve element 7 could have a shape of a segment of sphere. The stationary flow control surface 5 could be configured to be in contact with either the inner surface or the outer surface of the segment of sphere. Also other shapes are possible, as long as the relevant parts of the valve element 7 and the stationary flow control surface 5 are rotationally symmetric to allow the valve element 7 to be rotatable relative to the stationary flow control surface 5. For instance, the valve element 7 could be a slightly curved plate.

In the embodiment of figure 1, the rotation axis of the valve plate 7 is perpendicular to the axial directions of the inlet portion and the outlet portion of the flow channel 4. The flow direction through the openings 6, 8 of the stationary flow control surface 5 and the valve plate 7 is thus substantially perpendicular to the flow direction through the inlet and outlet portions of the flow channel 4. However, the mutual angle between the rotation axis of the valve plate 7 and the axial direction of inlet and outlet portions of the flow channel 4 could also be different.

Flow of the heat transfer liquid past the valve plate 7 is allowed only through the one or more valve element openings 8. The area of the valve element openings 8 thus determines another upper limit for the flow area through the valve 2.

The valve plate 7 is coupled to the electrical actuator 15 via a shaft 12. The valve 2 comprises a seal 19 that is arranged around the shaft 12. In figure 1 the seal 19 is depicted as an O-ring seal that seals the shaft 12 against the valve body 10, but many different sealing arrangements are possible.

The valve 2 further comprises a spring 9 for pushing the valve plate 7 against the flow control surface 5. In the embodiment of the figures, the spring 9 is arranged within the flow channel 4. In the embodiment of figure 1, one end of the spring 9 is supported against the valve plate 7. The opposite end of the spring 9 is supported against a surface of the flow channel 4.

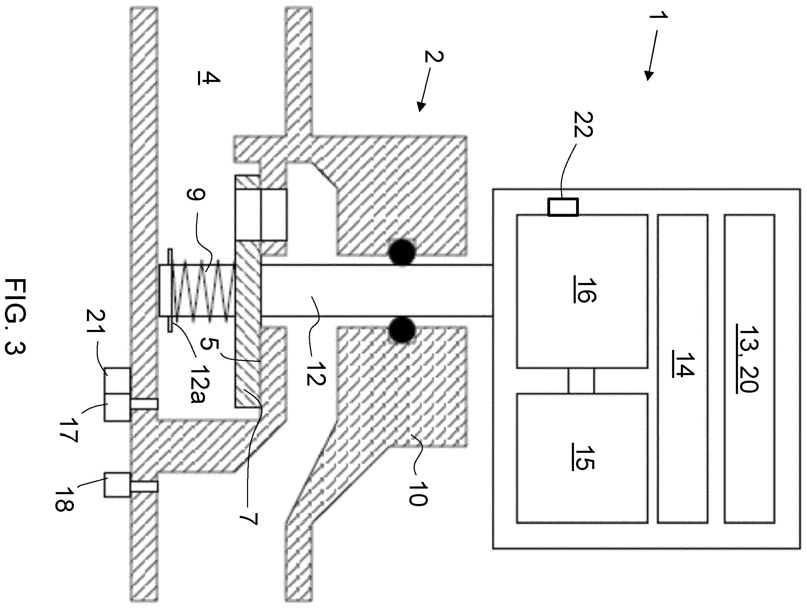

Figure 3 shows an alternative embodiment. In figure 3 one end of the spring 9 is supported against the valve plate 7 in the same way as in the embodiment of figure 1. However, the opposite end of the spring 9 is supported differently. In the embodiment of figure 3, the free end of the shaft 12, i.e. the end that is not connected to the electrical actuator 15, extends beyond the valve plate 7. The spring 9 is arranged around the free end of the shaft 12. One end of the spring 9 is fixed to the shaft 12. The shaft 12 is provided with a locking pin 12a for supporting the end of the spring 9. The valve plate 7, the shaft 12 and the spring 9 rotate together. The spring 9 is not in contact with the valve body 10. There is thus no rotational movement between the spring 9 and the valve plate 7. At the other end of the spring 9, there is a gap between the spring 9 and the surface of the flow channel 4. Friction forces between the spring 9 and the valve plate 7 and between the spring 9 and the valve body 10 are thus avoided.

Preferably, the free end of the shaft 12 is not in contact with any stationary surface of the valve. The spring 9 does not need to act directly on the valve plate 7, but the spring 9 could act on an additional element arranged between the valve plate 7 and an end of the spring 9. There are many alternative ways of supporting the spring 9 against the shaft 12. For instance, the shaft 12 could be provided with a flange or other protruding elements for supporting the spring 9.

The spring 9 could also be positioned differently than in the embodiments of figures 1 and 3. For instance, the spring 9 could be arranged around the shaft 12 on the outer side of the seal 19. As another alternative, the outer surface of the shaft 12 could be provided with a flange or protrusions, against which one end of the spring 9 could be arranged. The other end of the spring 9 could be supported, for instance, against the downstream side of the element forming the stationary flow control surface 5.

The valve 2 is configured so that by rotation of the valve plate 7 the position of the at least one valve element opening 8 relative to the at least one control surface opening 6 can be changed to adjust the size of the overlapping areas of the at least one valve element opening 8 and the at least one control surface opening 6. The flow area through the valve 2 can thus be adjusted by rotating the valve plate 7.

The valve 2 is preferably configured so that it has a fully closed state. In the fully closed state the valve element opening 8 is in such a position that it is not aligned with the control surface opening 6. In the fully closed state the valve element opening 8 and the control surface opening 6 do not have any overlapping areas and flow through the valve 2 is thus prevented. However, it is possible that the valve 2 does not have a fully closed state. In that case, the valve 2 has a minimum opening state, in which the valve element opening 8 and the control surface opening 6 partly overlap. In the minimum opening state, the size of the overlapping areas of the valve element opening 8 and the control surface opening 6 is at its minimum value and some flow through the valve 2 is allowed.

The valve 2 has a fully open state. In the fully open state, the size of the overlapping areas of the valve element opening 8 and the control surface opening 6 is at its maximum value. In the fully open state the valve plate 7 is in a rotational position where the available flow area through the valve element opening 8 is maximized. If the valve element opening 8 has an identical shape and size with the control surface opening 6, in the fully open state the valve element opening 8 and the control surface opening 6 can be fully aligned. The flow area through the valve 2 thus equals the area of the control surface opening 6 or the valve element opening 8. However, it is not necessary that the shapes and sizes of the valve element opening 8 and the control surface opening 6 are identical. The openings 6, 8 can have different shapes and/or sizes. Even if the shapes and sizes are identical, the valve 2 can be configured so that even in the fully open state of the valve 2 the openings 6, 8 are not fully aligned. For instance, the range of the rotational movement of the valve plate 7 can be limited, or the valve element opening 8 and the control surface opening 6 can be mutually offset in the radial direction of the valve plate 7.

Preferably the valve 2 is configured to have one or more intermediate states between the fully closed state / minimum opening state and the fully open state. Preferably the valve 2 has several intermediate states.

The opening degree of the valve 2 can be expressed as a percentage of the maximum flow area of the valve 2. In the fully open state of the valve 2, the opening degree of the valve 2 is 100 percent. In the fully closed state of the valve, the opening degree is 0 percent.

By rotating the valve plate 7 from a rotational position where the valve 2 is in the fully closed state, the valve element opening 8 becomes partly aligned with the control surface opening 6 and the valve 2 is in a partially open state.

Figures 2A and 2B show the valve plate 7 in two different rotational positions. The views are from the bottom of the valve 2 towards the valve plate 7. In the rotational position shown in figure 2A, only a small portion of the valve element opening 8 is aligned with the control surface opening 6. In the situation of figure 2A, the opening degree of the valve is approximately 15 percent. 15 percent of the area of the valve element opening 8 is thus available for the flow of the heat transfer liquid. In the rotational position of figure 2B, the opening degree of the valve 2 is approximately 70 percent.

In the embodiment of figures 2A and 2B, the valve element opening 8 is arc-shaped. Due to the arc-shaped opening 8, which has a constant width, the opening degree of the valve 2 changes linearly when the valve plate 7 is rotated. For instance, if a rotation angle of 0 degrees corresponds to the fully closed state of the valve 2 and a rotation angle of 150 degrees corresponds to a fully open state of the valve 2, with a rotation angle of 50 degrees the available flow area through the valve element opening 8 is one third of the maximum flow area and with a rotation angle of 75 degrees half of the maximum flow area.

A linearly changing flow area makes the control of the valve 2 simpler, but it is not necessary that the flow area changes linearly. Many different shapes of the valve element opening 8 are thus possible. The valve plate 7 and the control surface 5 could also comprise several openings 6, 8.

Figures 2A and 2B also show a stopper element 11 that is configured to prevent the valve plate 7 from moving beyond the rotational positions where the valve 2 is fully open or fully closed. In the embodiment of the figures, the stopper element 11 is arranged to protrude from the stationary flow control surface 5 and to cooperate with the valve element opening 8. However, a stopper element could also be arranged in many other ways. For instance, the valve plate 7 could comprise a separate opening, groove or other shape that is configured to cooperate with the 12toper element 11. The stopper element 11 could also be arranged to cooperate with the shaft 12 rotating the valve plate 7 or with the electrical actuator 15.

The stopper element 11 ensures that the valve plate 7 rotates only between predetermined positions, for instance corresponding to the fully open state of the valve 2 and the fully closed state / minimum opening state of the valve 2. The stopper element 11 could be utilized, for instance, for calibrating any means that are configured to monitor the rotational position of the valve plate 7. However, the stopper element 11 is not necessary, but there are many alternative ways to ensure that the valve plate 7 rotates within the intended moving range. For instance, the electrical actuator 15 can be mechanically configured to allow only certain rotational positions, or the control system of the valve unit 1 can be configured to monitor and limit the moving range.

In the embodiment of the figures, the valve plate 7 is arranged on the upstream side of the flow control surface 5. As the heat transfer liquid flows through the valve element opening 8, the pressure of the heat transfer liquid drops. The pressure is thus higher on the inlet side than on the outlet side of the valve plate 7. The pressure difference presses the valve plate 7 tightly against the stationary flow control surface 5.

The stationary flow control surface 5 and the mating surface of the valve plate 7 are preferably made of a durable material that provides low friction between the parts. The surfaces, or at least one of the surfaces can be, for instance, metal or ceramic surfaces. The surfaces could also be coated with diamond-like carbon (DLC) or other hard coating.

In the embodiment of the figures, the electrical actuator 15 is arranged within an actuator housing 3. The actuator housing 3 can be a separate part that is attached to the valve body 10. The actuator housing 3 can be made of one or more parts. However, the valve 2, the electrical actuator 15 and also other parts of the valve unit 1 could be arranged within a common housing.

In the embodiment of the figures, the electrical actuator is a DC motor 15. The valve unit 1 further comprises a gear 16. The gear 16 is arranged between the motor 15 and the shaft 12, which is coupled to the valve plate 7. The motor 15 can be, for instance, a stepper motor. A stepper motor could be used as the electrical actuator even without the gear 16. Even with other types of motors, the gear 16 may not be necessary. The gear 16 can be integrated in the motor 15 or it can be a separate entity. Instead of an electric motor, also some other kind of electrical actuator could be used. For instance, the electrical actuator could be a linear actuator and the valve unit 1 could comprise means for converting the linear movement of the linear actuator into rotational movement of the valve plate 7.

The valve unit 1 is preferably self-contained. The valve unit 1 does thus not need to be connected to mains current, but it can be operated using a dedicated power source. In the embodiment of the figures, the valve unit 1 is battery-powered. A battery 14 is arranged within the actuator housing 3. However, the valve unit 1 could also be provided with a separate housing for the battery 14, and the housing of the battery could be electrically connected to the actuator housing 3.

Instead of or in addition to the battery 14, electrical power needed for operating the valve unit 1 could be produced within the valve unit 1, for instance by utilizing the kinetic energy or thermal energy of the heat transfer liquid. Alternatively, or in addition, for instance a solar panel could be used for producing electricity for the valve unit 1. The solar panel could be placed on the outer side of the actuator housing 3, or it could be located apart from the actuator housing.

In the embodiment of the figures, the valve unit 1 comprises pressure measurement means 17, 18 for measuring the pressure of the heat transfer liquid both on the inlet side and on the outlet side of the valve plate 7. A first pressure sensor 17 is arranged to measure the pressure on the inlet side and a second pressure sensor 18 is arranged to measure the pressure on the outlet side of the valve plate 7.

The valve unit 1 can further comprise temperature measurement means 21 for measuring the temperature of the heat transfer liquid flowing through the valve 2. In the embodiments of the figures, the temperature measurement means 21 are arranged to measure the temperature on the inlet side of the valve plate 7. However, the temperature measurement means 21 could be arranged on the outlet side or both on the inlet and outlet sides.

The valve unit 1 can further comprise means 22 for determining the rotation angle of the valve plate 7. By determining the rotational position of the valve plate 7, the opening degree of the valve 2, i.e. the available flow area through the valve element opening 8 can be determined. The means for determining the rotation angle can comprise, for instance, an angle sensor. The rotation angle can be determined, for instance, from the shaft 12, electric motor 15 or gear 16. The means for determining the rotation angle can comprise an absolute sensor. However, instead of an absolute sensor, the means for determining the rotation angle could also comprise an incremental sensor and the absolute angle of the valve plate could be stored in a memory, which could be located in the valve unit 1 or outside of the valve unit 1, for instance in an external controller. The memory could be a volatile or a non-volatile memory. In case of a volatile memory, the rotational moving range of the valve plate 7 is preferably limited so that the valve plate 7 can be driven by the electrical actuator 15 to a known position, allowing thus determining of the opening degree of the valve 2 after a power supply to the volatile memory has been interrupted.

The valve unit 1 can comprise communication means 13 for communicating with a remotely located controller or other data receiving and/or transmitting unit. The communication means 13 are preferably wireless. The valve unit 1 can thus be a wireless unit, which does not have any wired connection for power supply or communication. The communication means 13 can use any suitable protocol for communicating with other data receiving/transmitting units.

In the embodiment of the figures, the communication means comprise a transceiver 13. The transceiver 13 is configured to both receive data and/or control signals from an external controller and to transmit data from the valve unit 1.

In the embodiments of the figures, the valve unit 1 further comprises a controller 20. The controller 20 can be configured to control the operation of the electrical actuator 15. The controller 20 can be an electronic controller. The controller 20 can comprise a processor. The controller 20 can also comprise a memory. The controller 20 can be configured to receive and process data. The controller 20 could receive data from different sensors of the valve unit 1 and/or from one or more external controllers and/or sensors. For instance, the controller 20 can receive and process data from the pressure measurement means 17, 18, the temperature measurement means 21 and/or the means 22 for determining the rotation angle of the valve plate 7. As an example of an external sensor, the controller 20 could receive data from a temperature sensor monitoring the temperature in the space where the heating element controlled by the valve unit 1 is arranged.

The valve unit 1 could be configured to transmit, for instance, temperature and pressure measurement data and/or data regarding the rotation angle of the valve plate 7. The valve unit 1 can be configured to transmit the data to an external controller, where the data is used for example for determining the flow rate through the valve 2 or the opening degree of the valve 2. However, the valve unit 1 can also be configured to process the data and to transmit processed data to an external controller or other external unit. For instance, the controller 20 of the valve unit 1 can be configured to determine the opening degree of the valve 2 based on the rotation angle of the valve plate 7, and the valve unit 1 can be configured to transmit data indicative of the opening degree to an external unit.

The valve unit 1 can be configured to control the electrical actuator 15 based on an external control signal. Alternatively, or in addition, the electrical actuator 15 could be controlled based on an internal control signal generated in the valve unit 1. For instance, the valve unit 1 could comprise a temperature sensor for monitoring the temperature of the space in which the valve unit 1 is located, and the electrical actuator 15 could be controlled based on a control signal that is generated based on the monitored temperature. Also, the valve unit 1 could be configured to control the electrical actuator 15 based on a predetermined control sequence if the external control signal is lost.

The valve unit 1 can be configured to change the rotational position of the valve plate 7 at predetermined intervals. This prevents sticking of the valve plate 7.

The valve unit 1 can be configured to communicate with other similar valve units 1.

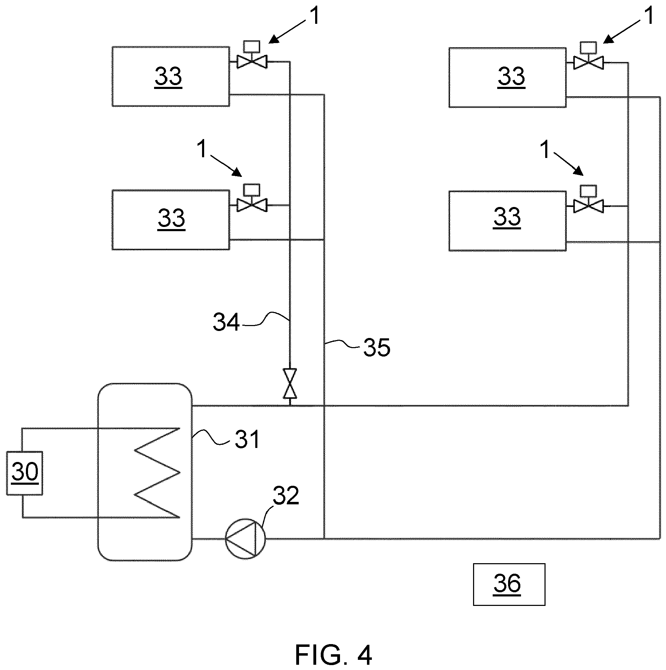

Figure 4 shows a heating system according to an embodiment of the invention. The heating system comprises a heat transfer piping 34, 35 for conveying heat transfer liquid in the heating system. The heating system also comprises a plurality of heating elements 33. The heating elements 33 can be, for instance, radiators. A heating element 33 could also be formed by a portion of the heat transfer piping. A heating element 33 could thus be, for instance, a pipe section arranged in the floor of a space to be heated by the heating system. The heating system can comprise different heating elements 33.

The heating system further comprises means 32 for circulating the heat transfer liquid in the heat transfer piping. The means 32 can comprise one or more pumps.

The heating system further comprises a heat source 30 for heating the heat transfer liquid circulated in the heat transfer piping 34, 35. The heat source 30 can be, for instance, a heat pump, solar collector, district heating system, fire-place, burner or electric heater. The heating system can comprise two or more different and/or similar heat sources.

The heat transfer piping comprises at least one supply pipe 34 for supplying the heat transfer liquid to the heating elements 33. The heat transfer piping further comprises at least one return pipe 35 for receiving cooled down heat transfer liquid from the heating elements 33. In the embodiment of figure 4, the heating system comprises a heat exchanger 31. The return pipe 35 is configured to convey the heat transfer medium from the heating elements 33 to the heat exchanger 31, where the heat source 30 heats the heat transfer liquid that has been cooled down when flowing through the heating elements 33.

In the embodiment of figure 4, the heating system further comprises a controller 36. The controller 36 can be configured to communicate with one or more of the valve units 1. For instance, the control unit 36 can transmit control signals to one or more of the valve units 1. The control unit 36 can be configured to receive data from one or more of the valve units 1. The control unit 36 can be configured to receive at least some of the following information: temperatures measured in the valve units 1, pressures measured in the valve units 1, rotation angles of the valve plates 7, opening degrees of the valves 2. The data received by the control unit 36 can be used for controlling the valve units 1 and for fault diagnosis.

It will be appreciated by a person skilled in the art that the invention is not limited to the embodiments described above, but may vary within the scope of the appended claims.

## Claims

1. A valve unit (1) for controlling the flow of a heat transfer liquid through a heating element (33) of a central heating system, the valve unit (1) comprising a valve (2) and an electrical actuator (15) for operating the valve (2), the valve (2) comprising
- a flow channel (4) having an inlet (4a) and an outlet (4b),
- a stationary flow control surface (5) that is arranged between the inlet (4a) and the outlet (4b) and comprises at least one control surface opening (6) for the flow of the heat transfer liquid, and
- a rotatable valve element (7) for controlling the flow in the flow channel (4), the valve element (7) comprising at least one valve element opening (8) extending through the valve element (7), the valve element (7) being rotatable against the flow control surface (5) about an axis that is perpendicular to the flow control surface (5) and to the surface provided with the valve element opening (8),
wherein by rotation of the valve element (7) the position of the at least one valve element opening (8) relative to the at least one control surface opening (6) can be changed to adjust the size of the overlapping areas of the at least one valve element opening (8) and the at least one control surface opening (6), and
wherein the valve unit (1) comprises means (22) for determining the rotation angle of the valve element (7) and wireless communication means (13) for communicating with a remotely located controller (36), and the valve unit (1) is configured to transmit to the remotely located controller (36) information on the opening degree of the valve (2) and/or the rotation angle of the valve element (7).

2. A valve unit (1) according to claim 1, wherein the valve element (7) is a valve plate.

3. A valve unit (1) according to claim 1 or 2, wherein the valve unit (1) is self-contained.

4. A valve unit (1) according to any of claims 1-3, wherein the valve unit (1) is battery-powered.

5. A valve unit (1) according to any of the preceding claims, wherein the valve (2) comprises at least one spring (9) for pushing the valve element (7) against the flow control surface (5).

6. A valve unit (1) according to claim 5, wherein the valve element (7) is connected to a shaft (12), the spring (9) is arranged around the shaft (12), one end of the spring (9) is supported against the valve element (7) and the opposite end of the spring (9) is fixed to the shaft (12) in such a manner that the spring (9) rotates together with the shaft (12) and the valve element (7).

7. A valve unit (1) according to any of the preceding claims, wherein the valve element (7) is arranged on the upstream side of the flow control surface (5).

8. A valve unit (1) according to any of the preceding claims, wherein the at least one valve element opening (8) and the at least one control surface opening (6) are configured such that a change in the rotation angle of the valve element (7) changes the size of the overlapping areas of the at least one valve element opening (6) and the at least one control surface opening (8) linearly.

9. A valve unit (1) according to any of the preceding claims, wherein the flow control surface (5) and/or the mating surface of the valve element (7) are metal or ceramic surfaces and/or provided with a coating configured to reduce friction and/or adherence of dirt and/or to improve wear resistance of said surfaces.

10. A valve unit (1) according to any of the preceding claims, wherein the valve unit (1) comprises pressure measurement means (17, 18) for measuring the pressure of the heat transfer liquid both on the inlet side and on the outlet side of the valve element (7) and/or temperature measurement means (21) for measuring the temperature of the heat transfer liquid.

11. A heating system comprising
- a heat transfer piping (34, 35) for conveying heat transfer liquid in the heating system,
- means (32) for circulating the heat transfer liquid in the heat transfer piping (34, 35),
- a heat source (30) for heating the heat transfer liquid circulated in the heat transfer piping (34, 35), and
- a plurality of heating elements (33), through which the heat transfer liquid is arranged to flow,
wherein at least some of the heating elements (33) of the heating system comprise a valve unit (1) according to any of the preceding claims for controlling the flow of heat transfer liquid through the heating element (33).
